# EUROPEAN PATENT SPECIFICATION

(11) **EP 4 333 538 B1**
(45) Date of publication and mention of the grant of the patent: **01.10.2025**
(21) Application number: 22836754.6
(22) Date of filing: 27.06.2022
(51) Int. Cl.: H04L 67/12, H04W 74/00, H04W 4/70, H04W 8/26, H04L 41/12, H04W 40/24, H04W 88/18

(54) **COMMUNICATION METHOD, SYSTEM AND APPARATUS**
KOMMUNIKATIONSVERFAHREN, -SYSTEM UND -VORRICHTUNG
PROCÉDÉ DE COMMUNICATION, SYSTÈME ET APPAREIL

(30) Priority: 06.07.2021 CN 202110760280
(43) Date of publication of application: 06.03.2024
(73) Proprietor: Huawei Technologies Co., Ltd., Shenzhen, Guangdong 518129 (CN)
(72) Inventor: ZHOU, Kai, Shenzhen, Guangdong 518129 (CN); ZHU, Jintao, Shenzhen, Guangdong 518129 (CN)
(74) Representative: Isarpatent
(86) International application number: PCT/CN2022/101555
(87) International publication number: WO 2023/280000

(56) References cited:
- WO-A1-2020/232667
- CN-A- 102 356 668
- CN-A- 105 323 780
- CN-A- 108 880 899
- CN-A- 109 831 334
- CN-A- 110 913 473
- KR-A- 20200 127 905

## Description

This application claims priority to Chinese Patent Application No. 202110760280.6, filed with the China National Intellectual Property Administration on July 6, 2021 and entitled "COMMUNICATION METHOD, SYSTEM, AND APPARATUS".

### TECHNICAL FIELD

This application relates to the communication field, and more specifically, to a communication method, system, and apparatus.

### BACKGROUND

A fieldbus is an underlaying communication network in a production and manufacturing field. The fieldbus realizes two-way serial multi-drop digital communication between microcomputerbased field measurement and control instruments or devices, and has characteristics of real-time performance and high stability. Since the International Electrotechnical Commission (IEC) announced adoption of the IEC61158 fieldbus standard in 2000, there are more than 10 fieldbus standards. The Ethernet is a local area network commonly used in the commercial field. The combination of a transmission control protocol/an internet protocol (transmission control protocol/internet protocol, TCP/IP) protocol to form a foundation of the Ethernet and becomes a de facto standard in network applications. This also enables, to be an inevitable trend, implementing integrated factory monitoring by a fieldbus control system by integrating the Ethernet and an enterprise information network.

With continuous development of a 5th generation (5th generation, 5G) industrial Internet technology, device communication in an industrial field network is currently being converted from wired communication to wireless communication. However, some protocols that are for discovering devices and that are based on a wired communication system are no longer applicable to a 5G-based industrial Internet. For example, a link layer discovery protocol (link layer discovery protocol, LLDP) run on a PROFINET IO system cannot discover a functional network element in a 5G core network, such as a user plane function (user plane function, UPF), a (radio) access network (radio access network, (R)AN). In addition, a packet of the LLDP is discarded because the packet cannot be identified by customer premise equipment (customer premise equipment, CPE) (which may be also referred to as user equipment (user equipment, UE)) in the 5G-based industrial Internet. In this case, if the LLDP protocol continues to be used, a topology structure of the 5G-based industrial Internet cannot be obtained. As a result, management software cannot obtain information about an industrial terminal, and cannot accurately manage the industrial terminal. Therefore, how to obtain the topology structure of the 5G industrial Internet becomes an urgent problem to be solved.
KR 2020 0127905 A describes an information providing device, which includes a memory and at least one processor executing instructions of a program loaded in the memory. A program comprises the steps of: receiving an IP address request message including an identifier of a specific industrial device from a smart factory server, and transmitting an IP address of the industrial device to the smart factory server, when receiving the IP address assigned to the specific industrial device from a network device. The industrial device is operated based on the content of the message received from the smart factory.

### SUMMARY

An object of the present invention is to provide a communication method, system, and apparatus, to enable a network side or a network management server side to obtain a topology structure of a 5G industrial Internet, learn of a topology connection relationship between an industrial terminal, a network terminal, and a wireless network, implement management on the industrial terminal, and meet a personalized requirement of the industrial terminal. This object is solved by the subject-matter of the appended independent claims, wherein further embodiments are set out in the dependent claims.

According to a first aspect, a communication method is provided, and the method includes: A first network element receives first information from a first terminal, where the first information includes a first identifier of a first terminal. The first network element sends second information to a second network element, where the second information includes the first identifier, the second information requests a second identifier of a first network, and the first network is a network accessed by the first terminal. The first network element receives third information from the second network element, where the third information includes the second identifier. The first network element sends fourth information to a first server, where the fourth information indicates an association relationship between the first identifier and the second identifier, and the first server is configured to manage the first terminal.

In the foregoing manner, the first terminal may be a terminal device that integrates an industrial terminal device and a network terminal device, and the first server may be a device management server or a management and monitoring software server.

In the foregoing manner, the first server provides, by learning of a connection relationship between the first terminal and the first network, a service for the first terminal in a personalized manner, and implements management on the first terminal.

In a possible implementation, the method includes: The first network element sends fifth information, where the fifth information includes the first identifier, the fifth information requests a third identifier of a second terminal, the second terminal is a device that connects the first terminal to the first network, and the first terminal is an industrial terminal device. The first network element receives sixth information, where the sixth information includes the third identifier. The first network element sends seventh information to the first server, where the seventh information indicates an association relationship between the first identifier and the third identifier.

In the foregoing manner, the second terminal is a network terminal, and the first terminal accesses the first network via the second terminal.

In the foregoing manner, the first server can provide, by learning of a connection relationship between the first terminal and the second terminal, the service for the first terminal in the personalized manner, and implements accurate management on the first terminal.

In a possible implementation, the fifth information includes a first event identifier, and the first event identifier indicates to request the third identifier of the second terminal.

In a possible implementation, the seventh information further indicates an association relationship between the first identifier, the second identifier, and the third identifier.

In the foregoing manner, the first server can learn of, by using the connection relationship between the first terminal and the second terminal and the connection relationship between the first terminal and the first network, a topology relationship between the first terminal, the second terminal, and the first network, can thus perform a subsequent operation by using the topology relationship, for example, calculating network load, and implements the accurate management on the first terminal.

In a possible implementation, the third identifier includes an international mobile subscriber identity IMSI and/or an international mobile equipment identity IMEI and/or a permanent subscriber identifier SUPI and/or a general public subscription identifier GPSI.

In a possible implementation, the first identifier includes a media access control layer MAC address and/or an internet protocol IP address and/or a device name and/or a device role and/or a device identifier.

For example, the first identifier may further include a device manufacturer of the first terminal, and/or a device instance (instance), and/or a subnet (subnet) accessed by the first terminal, and/or a gateway (gateway) accessed by the first terminal.

In a possible implementation, the second identifier includes a first cell identifier and/or a first access point name APN.

According to a second aspect, a communication system is provided. The communication system includes a first terminal, a first network element, a second network element, and a first server. The first terminal is configured to send first information, where the first information includes a first identifier of the first terminal, and the first terminal accesses a first network. The first network element is configured to receive the first information. The first network element is further configured to send second information to the second network element, where the second information includes the first identifier, and the second information requests a second identifier of the first network. The first network element is further configured to receive third information, where the third information includes the second identifier. The first network element is further configured to send fourth information to the first server, where the fourth information indicates an association relationship between the first identifier and the second identifier. The first server is configured to receive the fourth information, and the first server is further configured to manage the first terminal.

In the foregoing manner, the first terminal may be a terminal device that integrates an industrial terminal device and a network terminal device, and the first server may be a device management server or a management and monitoring software server.

In the foregoing manner, the first server provides, by learning of a connection relationship between the first terminal and the first network, a service for the first terminal in a personalized manner, and implements management on the first terminal.

In a possible implementation, the communication system further includes a second terminal. The first network element is configured to send fifth information, where the fifth information includes the first identifier, the fifth information requests a third identifier of the second terminal, the second terminal is a device that connects the first terminal to the first network, and the first terminal is an industrial terminal device. The first network element is further configured to receive sixth information, where the sixth information includes the third identifier. The first network element is further configured to send seventh information to the first server, where the seventh information indicates an association relationship between the first identifier and the third identifier.

In the foregoing manner, the second terminal is a network terminal, and the first terminal accesses the first network via the second terminal.

In the foregoing manner, the first server can provide, by learning of a connection relationship between the first terminal and the second terminal, the service for the first terminal in the personalized manner, and implements accurate management on the first terminal.

In a possible implementation, the fifth information includes a first event identifier, and the first event identifier indicates to request the third identifier of the second terminal.

In a possible implementation, the seventh information further indicates an association relationship between the first identifier, the second identifier, and the third identifier.

In the foregoing manner, the first server can learn of, by using the connection relationship between the first terminal and the second terminal and the connection relationship between the first terminal and the first network, a topology relationship between the first terminal, the second terminal, and the first network, can thus perform a subsequent operation by using the topology relationship, for example, calculating network load, and implements the accurate management on the first terminal.

In a possible implementation, the third identifier includes an international mobile subscriber identity IMSI and/or an international mobile equipment identity IMEI and/or a permanent subscriber identifier SUPI and/or a general public subscription identifier GPSI.

In a possible implementation, the first identifier includes a media access control layer MAC address and/or an internet protocol IP address and/or a device name and/or a device role and/or a device identifier.

For example, the first identifier may further include a device manufacturer of the first terminal, a device instance (instance), a subnet (subnet) accessed by the first terminal, and a gateway (gateway) accessed by the first terminal.

In a possible implementation, the second identifier includes a first cell identifier and/or a first access point name APN.

According to a third aspect, a communication apparatus is provided, and the apparatus includes: a transceiver module, configured to receive first information, where the first information includes a first identifier of a first terminal. The transceiver module is further configured to send second information, where the second information includes the first identifier, the second information requests a second identifier of a first network, and the first network is a network accessed by the first terminal. The transceiver module is further configured to receive third information, where the third information includes the second identifier. The transceiver module is further configured to send fourth information to a first server, where the fourth information indicates an association relationship between the first identifier and the second identifier, and the first server is configured to manage the first terminal.

In the foregoing manner, the first terminal may be a terminal device that integrates an industrial terminal device and a network terminal device, and the first server may be a device management server or a management and monitoring software server.

In the foregoing manner, the first server provides, by learning of a connection relationship between the first terminal and the first network, a service for the first terminal in a personalized manner, and implements management on the first terminal.

In a possible implementation, the apparatus includes: the transceiver module, further configured to send fifth information, where the fifth information includes the first identifier, the fifth information requests a third identifier of a second terminal, the second terminal is a device that connects the first terminal to the first network, and the first terminal is an industrial terminal device. The transceiver module is further configured to receive sixth information, where the sixth information includes the third identifier. The transceiver module is further configured to send seventh information to the first server, where the seventh information indicates an association relationship between the first identifier and the third identifier.

In the foregoing manner, the second terminal is a network terminal, and the first terminal accesses the first network via the second terminal.

In the foregoing manner, the first server can provide, by learning of a connection relationship between the first terminal and the second terminal, a service for the first terminal in a personalized manner, and implements accurate management on the first terminal.

In a possible implementation, the fifth information includes a first event identifier, and the first event identifier indicates to request the third identifier of the second terminal.

In a possible implementation, the seventh information further indicates an association relationship between the first identifier, the second identifier, and the third identifier.

In the foregoing manner, the first server can learn of, by using the connection relationship between the first terminal and the second terminal and the connection relationship between the first terminal and the first network, a topology relationship between the first terminal, the second terminal, and the first network, can thus perform a subsequent operation by using the topology relationship, for example, calculating network load, and implements the accurate management on the first terminal.

In a possible implementation, the third identifier includes an international mobile subscriber identity IMSI and/or an international mobile equipment identity IMEI and/or a permanent subscriber identifier SUPI and/or a general public subscription identifier GPSI.

In a possible implementation, the first identifier includes a media access control layer MAC address and/or an internet protocol IP address and/or a device name and/or a device role and/or a device identifier.

For example, the first identifier may further include a device manufacturer of the first terminal, and/or a device instance (instance), and/or a subnet (subnet) accessed by the first terminal, and/or a gateway (gateway) accessed by the first terminal.

In a possible implementation, the second identifier includes a first cell identifier and/or a first access point name APN.

According to a fourth aspect, a communication apparatus is provided. The communication apparatus may be a communication apparatus in the foregoing method embodiment, or may be a chip disposed in the communication apparatus. The communication apparatus includes a communication interface and a processor, and optionally, further includes a memory. The memory is configured to store a computer program or instructions. The processor is coupled to the memory and the communication interface. When the processor performs the computer program or the instructions, the communication apparatus is enabled to perform the method performed by the communication apparatus in the foregoing method embodiment.

For example, the memory and the processor may be integrated, or may be independent components.

According to a fifth aspect, a computer program product is provided, where the computer program product includes: computer program code, where when the computer program code is run, the method performed by the communication apparatus in the foregoing aspects is performed.

According to a sixth aspect, this application provides a chip system. The chip system includes a processor, configured to implement functions of the communication apparatus in the methods in the foregoing aspects. In a possible design, the chip system further includes a memory, configured to store program instructions and/or data. The chip system may include a chip, or may include a chip and another discrete component.

According to a seventh aspect, this application provides a computer-readable storage medium, where the computer-readable storage medium stores a computer program. When the computer program is run, the method performed by the communication apparatus in the foregoing aspects is implemented.

### BRIEF DESCRIPTION OF DRAWINGS

FIG. 1 is a diagram of an example of an application scenario applicable to an embodiment of this application;
FIG. 2 is a diagram of another example of an application scenario applicable to an embodiment of this application;
FIG. 3 is a schematic flowchart of an example according to an embodiment of this application;
FIG. 4 is a schematic flowchart of another example according to an embodiment of this application;
FIG. 5 is a schematic flowchart of still another example according to an embodiment of this application;
FIG. 6 is a schematic flowchart of yet another example according to an embodiment of this application;
FIG. 7 is a schematic flowchart of yet still another example according to an embodiment of this application;
FIG. 8 is a schematic structural diagram of a possible communication apparatus according to an embodiment of this application; and
FIG. 9 is a schematic structural diagram of a possible communication apparatus according to an embodiment of this application.

### DESCRIPTION OF EMBODIMENTS

The following describes technical solutions of this application with reference to accompanying drawings. It is clear that the described embodiments are some but not all of embodiments of this application. All other embodiments obtained by a person of ordinary skill in the art based on embodiments of this application without creative efforts shall fall within the protection scope of this application.

The technical solutions in embodiments of this application may be applied to various communication systems, for example: a narrow band-internet of things (narrow band-internet of things, NB-IoT) system, a global system of mobile communications (global system of mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) system or new radio (new radio, NR), a satellite communication system, a future 6th generation (6th generation, 6G) system.

A terminal device in embodiments of this application may also be referred to as user equipment (user equipment, UE), an access terminal, a terminal device unit (subscriber unit), a terminal device station, a mobile station (mobile station, MS), a remote station, a remote terminal, a mobile device, a user terminal, a terminal, a wireless communication device, a terminal device agent, or a terminal device apparatus. The terminal device may include various handheld devices, in-vehicle devices, internet of things (internet of things, IoT) devices, wearable devices, computing devices that have a wireless communication function, or another processing device connected to a wireless modem. The terminal device may further include a subscriber unit, a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), a machine type communication (machine type communication, MTC) terminal, a station (station, ST) in a wireless local area network (wireless local area network, WLAN). The terminal device may be a cellular phone, a cordless phone, a session initiation protocol (session initiation protocol, SIP) phone, a wireless local loop (wireless local loop, WLL) station, and a next generation communication system, for example, a terminal device in a 5G network, or a terminal device in a future evolved PLMN network.

The terminal device in embodiments of this application may alternatively be an industrial terminal device, and the industrial terminal device may include a controller device (for example, a programmable logic controller (programmable logic controller, PLC)), an industrial input/output (input/output, IO) device, or another device for an industrial operation in an industrial scenario. The industrial terminal device may access a 5G network via a 5G terminal device, to be managed and monitored by a server. The terminal device in embodiments of this application may alternatively be an industrial terminal having a 5G communication capability. For example, the industrial terminal device has a built-in 5G communication module.

A network device in embodiments of this application may be a device configured to communicate with the terminal device, and the network device may be a base transceiver station (base transceiver station, BTS) in a global system of mobile communications (global system of mobile communications, GSM) or code division multiple access (code division multiple access, CDMA), a NodeB (NodeB, NB) in a wideband code division multiple access (wideband code division multiple access, WCDMA) system, an evolved NodeB (evolved NodeB, eNB or eNodeB) in an LTE system, a radio controller in a cloud radio access network (cloud radio access network, CRAN) scenario, or a satellite base station in a satellite communication system. Alternatively, the network device may be a relay station, an access point, an in-vehicle device, a wearable device, a network device in a 5G network, a network device in a future evolved PLMN network, or the like. This is not limited in embodiments of this application.

It should be noted that, the technical solutions in embodiments of this application may be applicable to a central unit (central unit, CU) - distributed unit (distributed unit, DU) architecture, or may be applicable to an architecture in which a control plane (control plane, CP) and a user plane (user plane, UP) are separated. This is not limited in this application.

For ease of understanding, the following briefly describes basic concepts in embodiments of this application.

A protocol data unit (protocol data unit, PDU) session is a session service for implementing PDU connectivity between UE and a data network, and is identified by a PDU session identifier (Session ID).

A 5G local area network (local area network, LAN) is a LAN created by using 5G new radio. By using the 5G LAN, reliable and efficient transmission in an industrial Internet can be implemented and isolation of a service in the LAN from a public network is maintained.

CPE is a UE device defined in the 3rd generation partnership project (3rd Generation Partnership Project, 3GPP), and a current industrial input/output device (industrial terminal device) accesses a 5G-LAN network via the CPE.

A programmable logic controller (programmable logic controller, PLC) is an electronic apparatus for a digital operation that is specially designed for application in an industrial environment.

A human machine interface (human machine interface, HMI) is also referred to as a touchscreen monitor, and is an intelligent operation control and display apparatus.

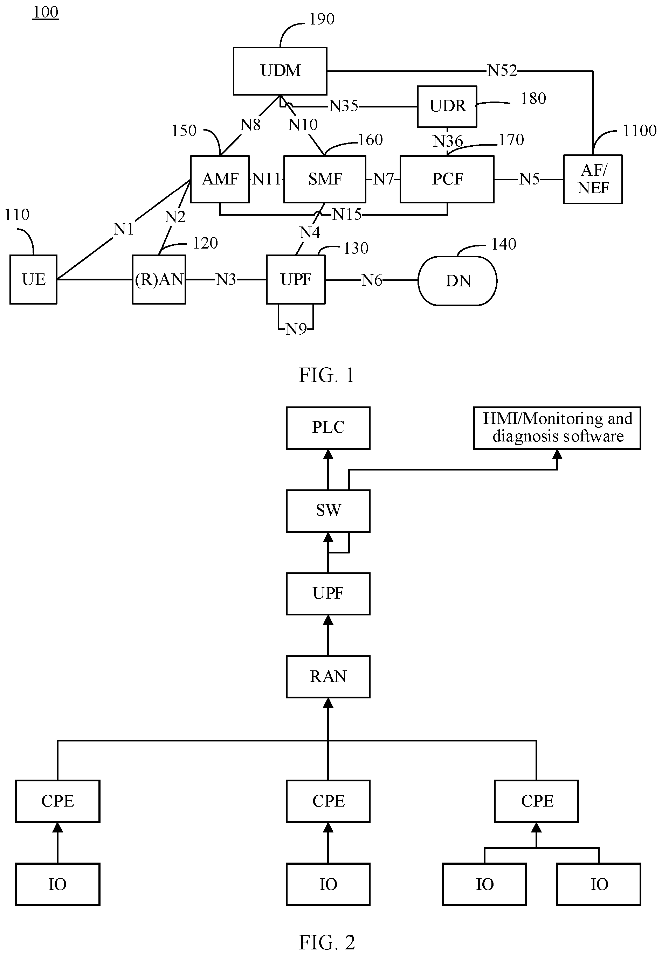

The following describes a system architecture or a scenario applicable to embodiments of this application. FIG. 1 is a diagram of an example of an application scenario applicable to an embodiment of this application. The following separately describes network elements that may be used in a network architecture 100 shown in FIG. 1.
1. UE 110: Refer to the foregoing descriptions. Details are not described herein again.
2. (Radio) access network (radio access network, (R)AN) network element 120: Refer to the foregoing descriptions. Details are not described herein again.

It should be noted that, the foregoing "network element" may also be referred to as an entity, a device, an apparatus, a module, or the like. This is not particularly limited in this application. In addition, in this application, for ease of understanding and description, the description of the "network element" is omitted in some descriptions. For example, the (R)AN network element is referred to as a (R)AN for short. In this case, the "(R)AN network element" should be understood as a (R)AN network element or a (R)AN entity. Same or similar cases are not described below.

3. A user plane network element 130 is configured to: route and forward a packet, process quality of service (quality of service, QoS) of user plane data, and the like.

In a 5G communication system, the user plane network element may be a user plane function (user plane function, UPF) network element. In a future communication system, the user plane network element may still be a UPF network element, or may have another name. This is not limited in this application.

4. A data network 140 is configured to provide a network for data transmission.

In the 5G communication system, the data network may be a data network (data network, DN). In a future communication system, the data network may still be a DN, or may have another name. This is not limited in this application.

5. An access management network element 150 is mainly used for mobility management, access management, and the like, and may be configured to implement functions, for example, lawful interception and access authorization/authentication, other than session management in functions of a mobility management entity (mobility management entity, MME).

In the 5G communication system, the access management network element may be an access and mobility management function (access and mobility management function, AMF) network element. In a future communication system, the access management network element may still be the AMF network element, or may have another name. This is not limited in this application.

6. A session management network element 160 is mainly configured to: manage a session, assign and manage an internet protocol (internet protocol, IP) address of the terminal device, select a termination point that can manage a user plane function interface and a policy control and charging function interface, notify downlink data, and the like.

In the 5G communication system, the session management network element may be a session management function (session management function, SMF) network element. In a future communication system, the session management network element may still be the SMF network element, or may have another name. This is not limited in this application.

7. A policy control network element 170 is configured to: guide a unified policy framework of a network behavior, and provide policy rule information for a control plane function network element (for example, the AMF network element or the SMF network element), and the like.

In a 4G communication system, the policy control network element may be a policy and charging rules function (policy and charging rules function, PCRF) network element. In the 5G communication system, the policy control network element may be a policy control function (policy control function, PCF) network element. In a future communication system, the policy control network element may still be the PCF network element, or may have another name. This is not limited in this application.

8. A unified data repository (unified data repository, UDR) function network element 180 is configured to: provide subscription data for a UDM network element, or obtain subscription data from the UDM network element; and provide policy data for the PCF network element, or obtain policy data from the PCF network element, or the like.

9. A data management network element 190 is used for processing an identifier of a terminal device, access authentication, registration, mobility management, or the like.

In the 5G communication system, the data management network element may be the unified data management (unified data management, UDM) network element. In a future communication system, the unified data management may still be the UDM network element, or may have another name. This is not limited in this application.

10. A network exposure function network element 1100 is mainly configured to securely expose services and capabilities provided by 3GPP network functions, including internally exposing the service and the capability, exposing the service and the capability to a third party, or the like.

In the 5G communication system, the network exposure function network element may be a network exposure function (network exposure function, NEF) network element. In a future communication system, the network exposure function network element may still be the NEF network element, or may have another name. This is not limited in this application.

Alternatively, an application function (application function, AF) network element 1100 is configured to implement information exchange between an external server and a 3GPP network.

It may be understood that the foregoing network element or the function may be a network element in a hardware device, may be a software function running on dedicated hardware, or may be a virtualized function instantiated on a platform (for example, a cloud platform).

Functions of interfaces are described as follows:
1. N7 represents an interface between the PCF and the SMF, and is configured to deliver a PDU session granularity control policy and a service data flow granularity control policy.
2. N15 represents an interface between the PCF and the AMF, and is configured to deliver a UE policy and an access control-related policy.
3. N5 represents an interface between the AF and the PCF, and is configured to: deliver an application service request, and report a network event.
4. N4 represents an interface between the SMF and the UPF, and is configured to transfer information between a control plane and a user plane, for example, deliver a forwarding rule, a QoS control rule, a traffic statistics rule, and the like from the control plane to the user plane, and report user plane information.
5. N11 represents an interface between the SMF and the AMF, and is configured to: transfer PDU session tunnel information between the RAN and the UPF, transfer a control message to be sent to the UE, transfer radio resource control information to be sent to the RAN, and the like.
6. N2 represents an interface between the AMF and the RAN, and is configured to transfer radio bearer control information from a core network side to the RAN, and the like.
7. N1 represents an interface between the AMF and the UE, is access-irrelevant, and is configured to transfer the QoS control rule and the like to the UE.
8. N8 represents an interface between the AMF and the UDM, and is used by the AMF to obtain access and mobility management-related subscription data and authentication data from the UDM, and used by the AMF to register current mobility management-related information of the UE with the UDM.
9. N10 represents an interface between the SMF and the UDM, and is used by the SMF to obtain session management-related subscription data from the UDM, and used by the SMF to register current session-related information of the UE with the UDM.
10. N35 represents an interface between the UDM and the UDR, and is used by the UDM to obtain user subscription data information from the UDR.
11. N36 represents an interface between the PCF and the UDR, and is used by the PCF to obtain policy-related subscription data and application data-related information from the UDR.
12. N52 represents an interface between the UDM and the NEF, and is used by the NEF to expose a network capability to a third-party application function. For example, the third-party application function subscribes reachability events of all users in a specified group to the UDM via the NEF.

In addition, the NEF has a direct interface with the AMF and the SMF. The interfaces correspond to an N29 interface and an N51 interface respectively (which are not shown in the above figure for brevity), and are configured to expose a network capability of an operator to the third-party application functional entity. The N29 interface may be used by the NEF to directly subscribe a corresponding network event to the AMF, and update user configuration information. The N51 interface may be configured to update application configuration data on the SMF/UPF, for example, packet flow description PFD (Packet Flow Description) information corresponding to an Application ID.

A general user registration procedure may be briefly described as follows: The UE sends a registration request to the AMF via the AN. The AMF obtains subscription data from a specific UDM based on a user identifier. After receiving the request, the UDM may obtain actual subscription data from the UDR. In addition, the AMF may further initiate a user policy control creation request (UEPolicyControl_Create) and an access management policy control creation request (AMPolicyControl Create) to the PCF, to separately obtain a UE policy and an access control policy. In this process, the PCF returns the access control policy to the AMF, and provides the UE policy for the UE via the AMF.

A general session establishment procedure may be briefly described as follows: The UE sends a session establishment request to the AMF via the RAN. The AMF selects an SMF to serve a session, stores a correspondence between the SMF and the PDU session, and sends a session establishment request to the SMF. The SMF selects a corresponding UPF for the UE, establishes a user plane transmission path, and allocates an IP address to the UE. In this process, the SMF further initiates a policy control session establishment request to the PCF, to establish a policy control session between the SMF and the PCF. In a policy control session association establishment process, the SMF stores a correspondence between the policy control session and the PDU session. In addition, the AF may further establish an AF session with the PCF, and the PCF binds the AF session to the policy control session.

It should be understood that, the foregoing network architecture applied to embodiments of this application is merely an example of a network architecture described from a perspective of a 5G networking architecture, and a network architecture applicable to embodiments of this application is not limited thereto. Any network architecture that can implement functions of the foregoing network elements is applicable to embodiments of this application.

For example, in some network architectures, network function entities such as the AMF, the SMF, the PCF, and the UDM are all referred to as network function (Network Function, NF) network elements. Alternatively, in some other network architectures, a set of network elements such as the AMF, the SMF, the PCF, and the UDM may be referred to as a control plane function (Control Plane Function, CPF) network element.

Embodiments are described with reference to a core network device in embodiments of this application. Main functions of the core network are to provide a user connection, manage a user, complete service carrying, and act as a bearer network to provide an interface to an external network. Establishment of a user connection includes functions such as mobility management (mobile management, MM), call management (connection management, CM), switching/routing, and recording notification. User management includes user description, quality of service (Quality of Service, QoS), user communication accounting (accounting), a virtual home environment (virtual home environment, VHE), and security (corresponding security measures provided by an authentication center, including security management for a mobile service and security processing for external network access). A bearer connection (access) includes a public switched telephone network (public switched telephone network, PSTN) to the outside, an external circuit data network, a packet data network, an internet (internet), an intranet (intranet), a short message service (short message service, SMS) server of a mobile network, and the like.

A basic service that the core network can provide includes mobile office, e-commerce, communication, an entertainment service, a travel and location-based service, a telemetry (telemetry) service, a simple message transfer service (monitoring and control), and the like.

FIG. 2 is a diagram of another example of an application scenario applicable to an embodiment of this application. As shown in FIG. 2, an industrial input/output (Input/Output, IO) device accesses a 5G-LAN via CPE, and is connected to monitoring and diagnosis software/an HMI and a PLC via a RAN, a UPF, and a switch (switch).

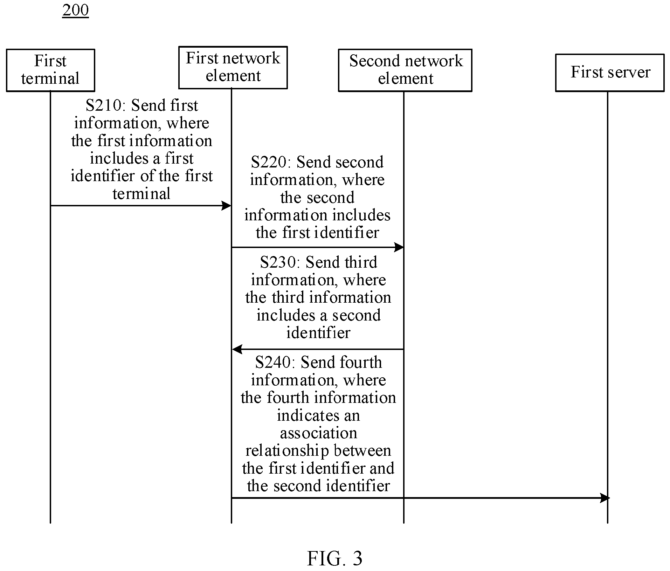

In the foregoing scenario, when the 5G is applied to an industrial Internet, a device discovery mechanism of a current industrial bus protocol cannot be applied to obtaining a topology structure of a 5G industrial Internet. To resolve the foregoing problem, this application provides a method 200. FIG. 3 is a schematic flowchart of an example according to an embodiment of this application.

S210: A first terminal sends first information, and a first network element receives the first information.

The first information includes a first identifier of the first terminal.

For example, the first terminal may be a terminal device that integrates an industrial terminal device and a network terminal device.

In a possible implementation, the first identifier includes a media access control layer MAC address and/or an internet protocol IP address and/or a device name and/or a device role and/or a device identifier.

For example, the first identifier may further include a device manufacturer of the first terminal, and/or a device instance (instance), and/or a subnet (subnet) accessed by the first terminal, and/or a gateway (gateway) accessed by the first terminal.

In a possible implementation, the first network element sends fifth information to a third network element, and receives sixth information from the third network element.

The fifth information includes the first identifier, the fifth information requests a third identifier of a second terminal, the second terminal is a device that connects the first terminal to the first network, and the first terminal is an industrial terminal device. The sixth information includes the third identifier.

In the foregoing manner, the second terminal is a network terminal, and the first terminal accesses the first network via the second terminal.

In a possible implementation, the fifth information includes a first event identifier, and the first event identifier indicates to request the third identifier of the second terminal.

In a possible implementation, the third identifier includes an international mobile subscriber identity IMSI and/or an international mobile equipment identity IMEI and/or a permanent subscriber identifier SUPI and/or a general public subscription identifier GPSI.

S220: The first network element sends second information, and a second network element receives the second information.

The second information includes the first identifier, the second information requests a second identifier of the first network, and the first network is a network accessed by the first terminal.

In a possible implementation, the second identifier includes a first cell identifier and/or a first access point name APN.

S230: The second network element sends third information, and the first network element receives the third information.

The third information includes the second identifier.

S240: The first network element sends fourth information to a first server, and the first server receives the fourth information.

The fourth information indicates an association relationship between the first identifier and the second identifier, and the first server is configured to manage the first terminal.

For example, the first server may be a device management server or a management and monitoring software server.

In a possible implementation, the first network element sends seventh information to the first server, where the seventh information indicates an association relationship between the first identifier and the third identifier.

In a possible implementation, the seventh information further indicates an association relationship between the first identifier, the second identifier, and the third identifier.

In the foregoing manner, the first server can learn of, by using the connection relationship between the first terminal and the second terminal and the connection relationship between the first terminal and the first network, a topology relationship between the first terminal, the second terminal, and the first network, can thus perform a subsequent operation by using the topology relationship, for example, calculating network load, and implements accurate management on the first terminal.

The following describes in detail the communication method provided in embodiments of this application with reference to the accompanying drawings.

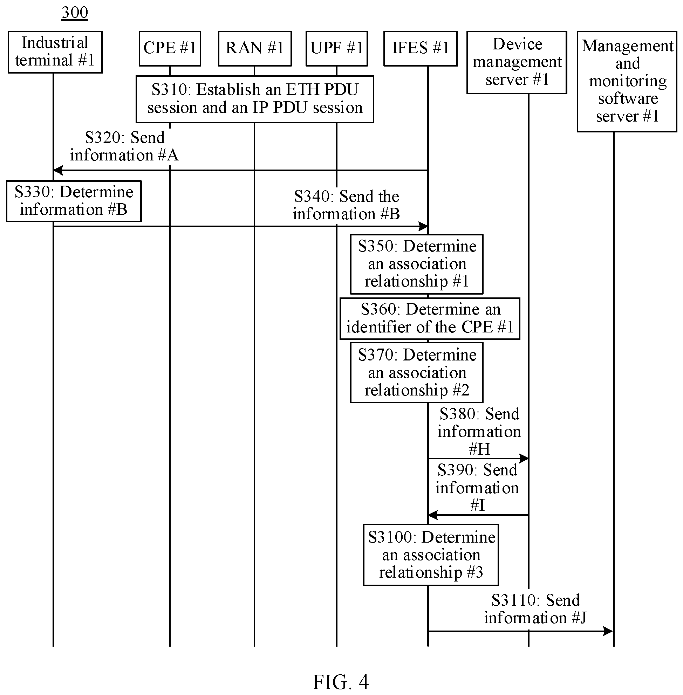

This application provides a method 300. FIG. 4 is a schematic flowchart of another example according to an embodiment of this application.

As shown in the method 300, in S310, CPE #1 establishes an Ethernet (Ethernet, ETH) PDU session and an IP PDU session with a UPF #1, and agent (agent) software on the CPE #1 completes registration on a device management server #1.

S320: An IFES #1 sends information #A, and an industrial terminal #1 receives the information #A.

It should be noted that, this application proposes an industrial field enable service (industrial field enable service, IFES) application/service. The application is responsible for extracting information about an industrial terminal, a connection relationship between the industrial terminal and CPE, and an association relationship between the CPE and a network accessed by the CPE, for example, an association relationship between identity code information of the CPE and information about the network accessed by the CPE. The identity code information of the CPE may be: an international mobile subscriber identity (international mobile subscriber identity, IMSI), and an international mobile equipment identity (international mobile equipment identity, IMEI). The information about the network accessed by the CPE may be association information of information such as an access point name (Access Point Name, APN) and a cell identifier. The IFES used as an application/service may access a network (for example, a 5G core network) that the CPE connected. Therefore, the IFES may be considered as a type of an AF. This is not limited in this application.

In a possible implementation, the IFES #1 sends the information #A via the UPF #1, a RAN #1, and the CPE #1, and the industrial terminal #1 receives the information #A via the CPE #1.

In a possible implementation, the IFES sends the information #A by using a discovery and basic configuration protocol (discovery and basic configuration protocol, DCP).

In a possible implementation, the IFES #1 sends the information #A in a multicast manner, and one or more industrial terminals send response information to the IFES #1 after receiving the information #A. The following uses one of the industrial terminals, that is, the industrial terminal #1, as an example for description.

The information #A requests device information of the industrial terminal #1 from the industrial terminal #1.

For example, the device information includes at least one of the following information:
Device manufacturer: a name or an identifier of a manufacturer that produces a device;
Device name: a name of the device;
Device identifier (identifier, ID): an identifier of the device;
Device role: whether the device is a controller (controller) (responsible for managing another device, to be specific, responsible for sending a control command to the another device) or a device (device) (not responsible for managing another device, to be specific, receiving the control command sent by the controller);
Device instance (instance): actual use and a virtual generation of a copy of a device entity that is loaded into a memory;
Media access control (media access control, MAC) layer address: an address for determining a location of the device;
IP address: a logical address of the device that complies with an IP protocol;
Subnet (subnet): a subnet accessed by the device; and
Gateway (gateway): a gateway connected to the device.

S330: The industrial terminal #1 determines information #B.

Specifically, after receiving the information #A, the industrial terminal #1 determines the information #B, where the information #B is used by the industrial terminal #1 to respond to the information #A.

The information #B includes the device information of the industrial terminal #1. For the device information, refer to the foregoing descriptions. Details are not described herein again.

In a possible implementation, if the industrial terminal #1 runs normally, the industrial terminal #1 sends an identity confirmation (identity OK) message to the IFES #1, where the message indicates a successful query.

S340: The industrial terminal #1 sends the information #B, and the IFES #1 receives the information #B.

In a possible implementation, the industrial terminal #1 sends the information #B via the CPE #1, the RAN #1, and the UPF #1, and the IFES #1 receives the information #B via the UPF #1. In this case, the UPF #1 obtains a MAC address #1 of the industrial terminal #1.

In a possible implementation, the industrial terminal #1 sends the information #B by using a DCP protocol.

In a possible implementation, the industrial terminal #1 periodically sends the information #B. In this case, the IFES does not need to send the information #A, and the industrial terminal #1 does not need to receive the information #A.

S350: The IFES #1 determines an association relationship #1.

Specifically, the IFES #1 generates the association relationship #1 based on the information #B, where the association relationship #1 is used to associate various pieces of device information of the industrial terminal, as shown in, for example, Table 1.

**Table 1**

| MAC address | Device name | IP address | Device ID | Device role | ... |
|---|---|---|---|---|---|
| MAC address #1 | Device name #1 | IP address #1 | Device ID #1 | Device role #1 | ... |
| ... | ... | ... | ... | ... | ... |

It should be understood that, in addition to information such as the MAC address, the device name, the IP address, the device ID, and the device role, the device information in Table 1 may further include other device information, such as the device manufacturer and the subnet.

It is assumed that the device information: the MAC address #1, the device name #1, the IP address #1, the device ID #1, and the device role #1 in Table 1 are device information of the industrial terminal #1. In this case, the device information is associated and corresponds to a same industrial terminal.

The IFES #1 can learn of the device information of the industrial terminal #1 by using the information #B.

S360: The IFES #1 determines an identifier of the CPE #1.

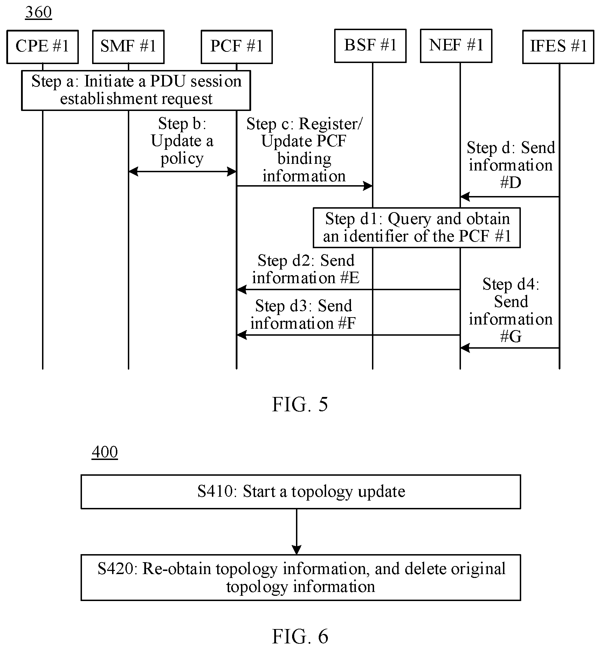

Specifically, S360 may be divided into the following steps (FIG. 5 is a schematic flowchart of still another example according to an embodiment of this application, representing a specific process in which the IFES obtains the identifier of the CPE).

Step a: The CPE #1 initiates an Ethernet-type PDU session establishment request.

The following uses an example in which the CPE #1 is connected to the industrial terminal #1 for description.

Step b: An SMF #1 updates a session management policy with a PCF #1.

In a possible implementation, when the SMF #1 updates the session management policy with the PCF #1, the SMF #1 sends the MAC address #1 to the PCF #1. In this case, the PCF #1 has a correspondence between the MAC address #1 and the CPE #1.

Specifically, the SMF #1 sends the MAC address #1 by using a session management policy association update request (session management policy association update request) message.

The UPF #1 sends the MAC address #1 of the industrial terminal #1, the SMF #1 receives the MAC address #1, the SMF #1 sends the MAC address #1, and the PCF #1 receives the MAC address #1.

In a possible implementation, before the UPF #1 sends the MAC address #1 of the industrial terminal #1, the UPF #1 determines whether the MAC address #1 is a new MAC address. If the MAC address #1 is a new MAC address, the UPF #1 sends the MAC address #1, and if the MAC address #1 is not a new MAC address, it indicates that the MAC address #1 is already sent, and the MAC address #1 is not sent this time.

Step c: The PCF #1 initiates a binding information registration/update procedure to a BSF #1 based on the received MAC address #1 (that is, the MAC address of the industrial terminal #1) information, where the binding information registration/update procedure carries information #C, and the information #C includes at least one of the following information:
a subscriber permanent identifier (subscriber permanent identifier, SUPI), for example, subscriber permanent identifier information of the CPE #1;
a generic public subscription identifier (generic public subscription identifier, GPSI), for example, general public subscription identifier information of the CPE #1;
a MAC address, for example, MAC address information of the industrial terminal #1;
a data network name (data network name, DNN), for example, information about a name of a 5G core network accessed by the CPE #1;
single network slice selection assistance information (single network slice selection assistance information, S-NSSAI), for example, single network slice selection assistance information accessed by the CPE #1;
a PCF identifier/address, for example, an identifier/address information of the PCF #1.

Step d: The IFES #1 may obtain identification information of the CPE #1 in the following two manners.

### Manner 1:

The IFES #1 sends information #D to the PCF #1, where the information #D requests to query user identification information. The PCF #1 may determine, based on the information #D, an identifier (for example, the SUPI and the GSPI) of the CPE #1 corresponding to the MAC address #1, and send the identifier to the IFES #1.

For example, the information #D includes the MAC address information of the industrial terminal, for example, the MAC address #1 of the industrial terminal #1.

By sending the MAC address #1 of the industrial terminal #1, the IFES #1 requests, from a NEF, the identification information of the CPE #1 connected to the IFES #1.

For example, the information #D may further include the DNN.

In a possible implementation, the information #D may further include an event identifier (event ID), indicating that a type of an event initiated by the information #D is a query user identifier.

### Manner 2:

The IFES #1 determines and sends the information #D, and a NEF #1 receives the information #D.

Step d1: The NEF #1 queries the BSF #1 for a PCF based on the MAC address #1, and obtains the identifier/address of the PCF #1.

Step d2: The NEF #1 determines and sends information #E, and the PCF #1 receives the information #E.

Specifically, the NEF #1 sends the information #E to the PCF #1 based on the identifier/address of the PCF #1, where the information #E requests to query the identification information of the CPE #1 connected to the industrial terminal #1.

For example, the information #E includes the MAC address #1 of the industrial terminal #1, and may further include the DNN and/or the event identifier.

Step d3: The PCF #1 determines and sends information #F, and the NEF #1 receives the information #F.

Specifically, the PCF #1 determines, based on the information #E, the identifier of the CPE #1 connected to the industrial terminal #1, and the information #F includes the identifier of the CPE #1.

For example, the information #F includes at least one of the following information:
an SUPI, for example, an SUPI #1 of the CPE #1;
a GPSI, for example, a GPSI #1 of the CPE #1; and
an IMSI, for example, an IMSI #1 of the CPE #1.

Step d4: The NEF #1 determines and sends information #G, and the IFES #1 receives the information #G.

The NEF #1 determines the identifier of the CPE #1 based on the information #F, and the information #G includes the identifier of the CPE #1. For content of the information #G, refer to content of the information #F. Details are not described herein again.

In a possible implementation, the PCF #1 determines and sends the information #G, and the PCF#1 receives the information #G.

S370: The IFES #1 determines an association relationship #2, where the association relationship #2 is used to associate the industrial terminal and the CPE.

Specifically, the IFES determines the association relationship #2 based on the information #G, as shown in, for example, Table 2.

**Table 2**

| MAC address | IMSI | ... |
|---|---|---|
| MAC address #1 | IMSI #1 | ... |
| ... | ... | ... |

It should be noted that, in Table 2, in addition to using the MAC address and the IMSI to associate the industrial terminal and the CPE, the MAC address and the SUPI may also be used to associate the industrial terminal and the CPE, or the MAC address, the SUPI, and the IMSI are used to associate the industrial terminal and the CPE, that is, it only needs that the device information of the industrial terminal is associated with the identification information of the CPE. This is not limited in this application.

As shown in Table 2, an example of associating the industrial terminal #1 and the CPE #1 is used. The MAC address #1 of the industrial terminal #1 and the IMSI #1 of the CPE #1 are associated together, and it indicates that the industrial terminal #1 and the CPE #1 are in a relationship of a mutual connection.

S380: The IFES #1 sends information #H, and the device management server #1 receives the information #H.

The information #H requests to query the device information of the CPE #1 and information about an accessed network.

For example, the information #H includes the IMSI #1 of the CPE #1, and may further include the event identifier (event ID), indicating that an initiated event is to query the device information of the CPE corresponding to the IMSI and the information about the accessed network.

S390: The device management server #1 sends information #I, and the IFES #1 receives the information #I.

Specifically, the device management server #1 determines the information #I based on the information #H, where the information #I includes information such as the IMEI #1 corresponding to the CPE #1 and/or the APN #1 corresponding to the CPE #1 and/or the cell identifier #1 corresponding to the CPE #1.

S3100: The IFES #1 determines an association relationship #3.

Specifically, the IFES #1 determines the association relationship #3 based on the information #I, where the association relationship #3 is used to associate the device information of the CPE and the information about the network accessed by the CPE, as shown in, for example, Table 3.

**Table 3**

| IMSI | Cell identifier | IMEI | APN | ... |
|---|---|---|---|---|
| IMSI #1 | Cell identifier #1 | IMEI #1 | APN #1 | ... |
| ... | ... | ... | ... | ... |

It should be noted that, the IMSI and the cell identifier, or the IMSI, the IMEI, and the cell identifier, or the IMSI and the APN, or the IMSI, the cell identifier, and the APN may be used to associate the device information of the CPE and the information about the network accessed by the CPE. In other words, the content in Table 3 is merely used as an example of associating the device information of the CPE and the information about the network accessed by the CPE, and constitutes no limitation on this application.

As shown in Table 3, an example of associating the device information of the CPE #1 and the information about the network accessed by the CPE #1 is used for description. The IMSI #1 and the IMEI #1 are used as the device information of the CPE #1. The cell identifier #1 and the APN #1 are used as the information about the network accessed by the CPE #1. The device information of the CPE #1 and the information about the network accessed by the CPE #1 are associated together.

S3110: The IFES #1 sends information #J, and a management and monitoring software server #1 receives the information #J.

The information #J includes an association relationship #4, and the association relationship #4 is used to associate the industrial terminal, the CPE, and network information corresponding to the CPE.

Specifically, the IFES #1 determines the association relationship #4 based on the association relationship #1, the association relationship #2, and the association relationship #3, as shown in, for example, Table 4.

**Table 4**

| MAC address | Device name | IP address | Device ID | Device role | IMSI | Cell identifier | IMEI | APN | ... |
|---|---|---|---|---|---|---|---|---|---|
| MAC address #1 | Device name #1 | IP address #1 | Device ID #1 | Device role #1 | IMSI #1 | Cell identifier #1 | IMEI #1 | APN #1 | ... |
| ... | ... | ... | ... | ... | ... | ... | ... | ... | ... |

It should be noted that, a plurality of combinations such as the MAC address, the IP address, the IMSI, and the APN, or the MAC address, the device name, the IP address, the IMSI, the APN, and the cell identifier, or the MAC address, the device ID, the IP address, the IMSI, the APN, the cell identifier, and the IMEI may be used to associate the industrial terminal, the CPE, and the information about the network accessed by the CPE. This is not limited to the combinations in Table 4. Details are not described herein again in this application.

As shown in Table 4, an example of associating the industrial terminal #1, the CPE #1, and the information about the network accessed by the CPE #1 is used for description. The MAC address #1, the device name #1, the IP address #1, the device ID #1, and the device role #1 are used as device information corresponding to the industrial terminal #1. The IMSI #1 and the IMEI #1 are used as device information corresponding to the CPE #1. The APN #1 and the cell identifier #1 are used as the corresponding information about the network access by the CPE #1. The industrial terminal #1, the CPE #1, and the information about the network accessed by the CPE #1 are associated together. The IFES #1 learns of a topology relationship of an entire network by using the association relationship #4.

In a possible implementation, the IFES #1 sends the information #J by using a simple network management protocol (simple network management protocol, SNMP).

It should be noted that, in the method 300, the industrial terminal #1 is used as an example to describe obtaining a topology structure of the entire network by the IFES #1. The method 300 is also applicable to obtaining, by the IFES #1, the topology structure of the entire network including a plurality of industrial terminals.

By using the method 300, the IFES can obtain an association relationship between the industrial terminal and the CPE and an association relationship between the CPE and the network accessed by the CPE, thus learns of the topology structure of the entire network, to enable a core network to provide customized bandwidth or services based on requirements of different industrial terminals. In addition, it is easier to change a binding relationship between the industrial terminal and the CPE when the relationship between the industrial terminal and the CPE is obtained in the foregoing manner. Furthermore, based on the association relationship between the CPE and the network accessed by the CPE, it can be ensured that subsequent operations such as network load calculation can be accurately performed.

After obtaining the topology structure of the entire network by using the method 300, the IFES further faces a problem of updating the topology structure. In view of this, this application provides a method 400 to update the topology structure of the entire network. FIG. 6 is a schematic flowchart of yet another example according to an embodiment of this application.

S410: An IFES #1 starts a topology update.

Specifically, the IFES #1 periodically updates a topology of an entire network.

In a possible implementation, there is a "topology update timer" inside the IFES #1. When the timer expires, the IFES #1 is triggered to update the topology of the entire network.

S420: After re-obtaining topology information of the entire network based on the method S310 to S3110, the IFES #1 deletes original topology information, and retains latest topology information.

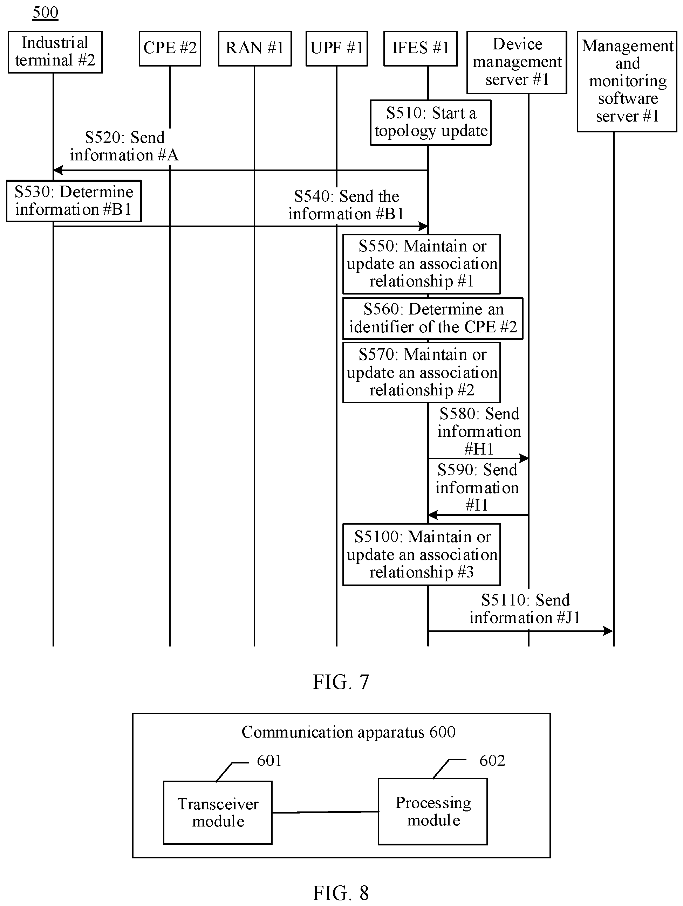

This application further provides a method 500 to update the topology structure of the entire network. FIG. 7 is a schematic flowchart of yet still another example according to an embodiment of this application.

S510: An IFES #1 starts a topology update.

For specific content, refer to the method S410. Details are not described herein again.

S520: The IFES #1 sends information #A, and an industrial terminal #2 receives the information #A.

For specific content, refer to the method S320. Details are not described herein again.

S530: The industrial terminal #2 determines information #B1.

For specific content, refer to the method S330. Details are not described herein again. For content of the information #B1, refer to the information #B. Details are not described herein again.

S540: The industrial terminal #2 sends the information #B1, and the IFES #1 receives the information #B1.

S550: The IFES #1 maintains or updates an association relationship #1.

Specifically, the IFES #1 determines, based on the information #B1 and Table 1 (or the association relationship #1), whether the industrial terminal #2 is a new device.

If device information in the information #B1 is not completely the same as the device information of the industrial terminal in Table 1, the industrial terminal #2 is determined a new device, and content in the information #B1 is added to Table 1. An updated Table 1 is shown as follows:

**Table 1**

| MAC address | Device name | IP address | Device ID | Device role | ... |
|---|---|---|---|---|---|
| MAC address #1 | Device name #1 | IP address #1 | Device ID #1 | Device role #1 | ... |
| MAC address #2 | Device name #2 | IP address #2 | Device ID #2 | Device role #2 | ... |
| ... | ... | ... | ... | ... | ... |

The device information: the MAC address #2, the device name #2, the IP address #2, the device ID #2, and the device role #2 are the device information of the industrial terminal #2.

If the device information in the information #B1 is completely the same as the device information of the industrial terminal in Table 1, the industrial terminal #2 is determined an original device, and the device information in the information #B1 is not stored in Table 1.

In a possible implementation, if the IFES #1 receives no device information that is responded by the industrial terminal #1 and that corresponds to the MAC address #1, the IFES #1 deletes the device information related to the industrial terminal #1 in Table 1. Alternatively,
although the MAC address #2 that is the same as the MAC address #1 is received, other device information such as the IP address #1 is different from the IP address #2. Therefore, records such as "the MAC address #1, the device name #1, the IP address #1, the device ID #1, and the device role #1" corresponding to the industrial terminal #1 in Table 1 are deleted, and records such as "the MAC address #2, the device name #2, the IP address #2, the device ID #2, and the device role #2" corresponding to the industrial terminal #2 are stored. This scenario may be that the industrial terminal #1 changes the connected CPE, and the IFES #1 considers, as the new device, the industrial terminal #1 (that is, the industrial terminal #2) obtained by changing the CPE.

The following describes the following method by using an example in which the industrial terminal #2 is the new device.

S560: The IFES #1 receives identification information of CPE #2 corresponding to the industrial terminal #2.

For specific content, refer to the method S360. Details are not described herein again.

S570: The IFES #1 maintains or updates an association relationship #2.

For example, the IFES #1 stores, into Table 2, the MAC address #2 and the IMSI #2 corresponding to the CPE #2. An updated Table 2 is shown as follows:

**Table 2**

| MAC address | IMSI | ... |
|---|---|---|
| MAC address #1 | IMSI #1 | ... |
| MAC address #2 | IMSI #2 | ... |
| ... | ... | ... |

For specific content, refer to the method S370. Details are not described herein again.

S580: The IFES #1 sends information #H1, and a device management server #1 receives the information #H1.

The information #H1 requests to query the device information of the CPE #2 and information about an accessed network. For specific content, refer to the method S380. Details are not described herein again.

S590: The device management server #1 sends information #I1, and the IFES #1 receives the information #I1.

Specifically, the device management server #1 determines the information #I1 based on the information #H1, where the information #I1 includes information such as the IMEI #2 corresponding to the CPE #2 and/or an APN #2 corresponding to the CPE #2 and/or a cell identifier #2 corresponding to the CPE #2.

S5100: The IFES #1 maintains or updates an association relationship #3.

For example, the IFES #1 updates the association relationship #3 based on the information #I1, as shown in, for example, the following updated Table 3.

**Table 3**

| IMSI | Cell identifier | IMEI | APN | ... |
|---|---|---|---|---|
| IMSI #1 | Cell identifier #1 | IMEI #1 | APN #1 | ... |
| IMSI #2 | Cell identifier #2 | IMEI #2 | APN #2 | ... |
| ... | ... | ... | ... | ... |

For specific content, refer to the method S3100. Details are not described herein again.

S5110: The IFES #1 sends information #J1, and a management and monitoring software server receives the information #J1.

Specifically, the IFES #1 determines an updated Table 4 based on the updated Table 1, the updated Table 2, and the updated Table 3. The updated Table 4 is shown as follows:

**Table 4**

| MAC address | Device name | IP address | Device ID | Device role | IMSI | Cell identifier | IMEI | APN | ... |
|---|---|---|---|---|---|---|---|---|---|
| MAC address #1 | Device name #1 | IP address #1 | Device ID #1 | Device role #1 | IMSI #1 | Cell identifier #1 | IMEI #1 | APN #1 | ... |
| MAC address #2 | Device name #2 | IP address #2 | Device ID #2 | Device role #2 | IMSI #2 | Cell identifier #2 | IMEI #2 | APN #2 | ... |
| ... | ... | ... | ... | ... | ... | ... | ... | ... | ... |

For example, the information #J1 includes a newly added association relationship between the industrial terminal #2, the CPE #2, and the information about the network accessed by the CPE #2 in Table 4. For example, the information #J1 includes information such as the MAC address #2, the device name #2, the IP address #2, the device ID #2, the device role #2, the IMSI #2, the IMEI #2, the APN #2, and the cell identifier #2, so that the management and monitoring software server #1 easily learns of a latest topology structure of the entire network.

For other specific content, refer to the method S3110. Details are not described herein again.

By using the method 400 and the method 500, the IFES is enabled to periodically update the topology relationship of the entire network, and periodically report the updated topology relationship of the entire network to the management and monitoring software.

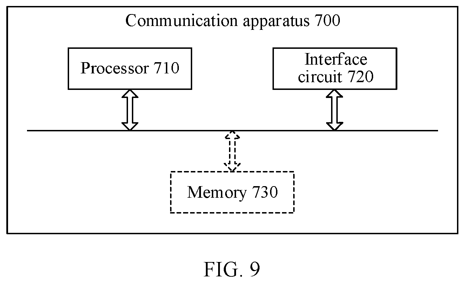

FIG. 8 and FIG. 9 each are a schematic structural diagram of a possible communication apparatus according to an embodiment of this application. These communication apparatuses can implement a function of the terminal device or the network device in the foregoing method embodiments, and thus can also achieve beneficial effects of the foregoing method embodiments. In embodiments of this application, the communication apparatus may be a first communication apparatus (corresponding to the first network element) in the method 200, or may be a module (for example, a chip) used in the first communication apparatus.

As shown in FIG. 8, a communication apparatus 600 includes a transceiver module 601 and a processing module 602. The communication apparatus 600 may be configured to implement a function of the first communication apparatus in the method embodiment shown in FIG. 3.

When the communication apparatus 600 is configured to implement the function of the first communication apparatus in the method embodiment in FIG. 3, the transceiver module 601 is configured to receive first information, where the first information includes a first identifier of a first terminal. The transceiver module 601 is further configured to send second information, where the second information includes the first identifier, the second information requests a second identifier of a first network, and the first network is a network accessed by the first terminal. The transceiver module 601 is further configured to receive third information, where the third information includes the second identifier. The transceiver module 601 is further configured to send fourth information to a first server, where the fourth information indicates an association relationship between the first identifier and the second identifier, and the first server is configured to manage the first terminal. The processing module 602 is configured to determine the second information and the fourth information.

For more detailed descriptions of the transceiver module 601 and the processing module 602, refer to related descriptions in the foregoing method embodiment. Details are not described herein again.

As shown in FIG. 9, a communication apparatus 700 includes a processor 710 and an interface circuit 720. The processor 710 and the interface circuit 720 are coupled to each other. It may be understood that the interface circuit 720 may be a transceiver or an input/output interface. Optionally, the communication apparatus 700 may further include a memory 730, configured to store instructions executed by the processor 710, or store input data needed by the processor 710 to run the instructions, or store data generated after the processor 710 runs the instructions.

For example, the memory 730 and the processor 710 may be integrated, or may be independent components.

When the communication apparatus 700 is configured to implement the method in the foregoing method embodiments, the processor 710 is configured to perform a function of the foregoing processing module 602, and the interface circuit 720 is configured to perform a function of the foregoing transceiver module 601.

When the foregoing communication apparatus is a chip used in the first communication apparatus, the chip in the first communication apparatus implements a function of the first communication apparatus in the foregoing method embodiments. The chip in the first communication apparatus receives information from another module (for example, a radio frequency module or an antenna) in the first communication apparatus. Alternatively, the chip in the first communication apparatus sends information to another module (for example, the radio frequency module or the antenna) in the first communication apparatus.

It may be understood that, the processor in embodiments of this application may be a central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

It should be noted that, embodiments in this specification are all described in a progressive manner, mutual reference may be made to the same or similar part of embodiments, and each embodiment focuses on illustrating a difference from other embodiments. In particular, a system or a system embodiment is basically similar to a method embodiment, and thus is described briefly. For related parts, refer to partial descriptions of the method embodiments. The described system or the system embodiment is merely an example. The units described as separate parts may or may not be physically separate, and parts displayed as units may or may not be physical units, may be located in one position, or may be distributed on a plurality of network elements. Some or all of the modules may be selected based on an actual requirement to achieve the objectives of the solutions of embodiments. A person of ordinary skill in the art may understand and implement the embodiment without creative efforts.

It should be further noted that, in this specification, relational terms such as first, second, "#1", and "#2" are merely used to distinguish one entity or operation from another, and do not necessarily require or imply that any actual relationship or sequence exists between these entities or operations. Moreover, the terms "include", "comprise", or any other variants are intended to cover the non-exclusive inclusion, so that a process, a method, an article, or a device that includes a list of elements not only includes those elements but also includes other elements that are not expressly listed, or further includes elements inherent to such a process, method, article, or device. An element preceded by "includes a..." does not, without more constraints, preclude the presence of additional identical elements in the process, method, article, or device that includes the element.

The method steps in embodiments of this application may be implemented in a hardware manner or may be implemented in a manner of executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk drive, a CD-ROM, or any other form of storage medium well-known in the art. For example, the storage medium is coupled to a processor, so that the processor can read information from the storage medium or write information into the storage medium. Certainly, the storage medium may be a component of the processor. The processor and the storage medium may be located in the ASIC. In addition, the ASIC may be located in an access network device or a terminal device. Certainly, the processor and the storage medium may alternatively exist in the access network device or the terminal device as discrete components.

All or a part of the foregoing embodiments may be implemented by software, hardware, firmware, or any combination thereof. When the software is used to implement embodiments, all or a part of embodiments may be implemented in a form of a computer program product. The computer program product includes one or more computer programs or instructions. When the computer programs or the instructions are loaded and executed on a computer, all or some of the procedures or functions in embodiments of this application are implemented. The computer may be a general-purpose computer, a dedicated computer, a computer network, or any other programmable apparatus. The computer programs or the instructions may be stored in a computer-readable storage medium, or may be transmitted through the computer-readable storage medium. The computer-readable storage medium may be any usable medium accessible by a computer, or a data storage device such as a server integrating one or more usable media. The usable medium may be a magnetic medium, for example, a floppy disk, a hard disk drive, or a magnetic tape. The usable medium may alternatively be an optical medium, for example, a DVD; or may be a semiconductor medium, for example, a solid state disk (solid state disk, SSD).

In this application, "at least one" means one or more, and "a plurality of" means two or more. The term "and/or" is an association relationship for describing associated objects and represents that three relationships may exist. For example, A and/or B may represent the following cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. The sequence numbers of the foregoing processes do not mean an execution sequence, and the execution sequence of the processes should be determined based on functions and internal logic of the processe: The invention is defined by the appended claims.

## Claims

1. A communication method, comprising:
receiving (S210), by a first network element, first information from a first terminal, wherein the first information comprises a first identifier of the first terminal;
sending (S220), by the first network element, second information to a second network element, wherein the second information comprises the first identifier, the second information requests a second identifier of a first network, and the first network is a network accessed by the first terminal;
receiving (S230), by the first network element, third information from the second network element, wherein the third information comprises the second identifier; and
sending (S240), by the first network element, fourth information to a first server, wherein the fourth information indicates an association relationship between the first identifier and the second identifier, and the first server is configured to manage the first terminal.

2. The method according to claim 1, wherein the method comprises:
sending, by the first network element, fifth information, wherein the fifth information comprises the first identifier, the fifth information requests a third identifier of a second terminal, the second terminal is a device that connects the first terminal to the first network, and the first terminal is an industrial terminal device;
receiving, by the first network element, sixth information, wherein the sixth information comprises the third identifier; and
sending, by the first network element, seventh information to the first server, wherein the seventh information indicates an association relationship between the first identifier and the third identifier.

3. The method according to claim 2, wherein the fifth information comprises a first event identifier, and the first event identifier indicates to request the third identifier of the second terminal.

4. The method according to claim 2 or 3, wherein the seventh information further indicates an association relationship between the first identifier, the second identifier, and the third identifier.

5. The method according to any one of claims 2 to 4, wherein the third identifier comprises an international mobile subscriber identity, IMSI, and/or an international mobile equipment identity, IMEI, and/or a permanent subscriber identifier, SUPI, and/or a general public subscription identifier, GPSI.

6. The method according to any one of claims 1 to 5, wherein the first identifier comprises a media access control layer, MAC, address and/or an internet protocol, IP, address and/or a device name and/or a device role and/or a device identifier.

7. The method according to any one of claims 1 to 6, wherein the second identifier comprises a first cell identifier and/or a first access point name, APN.

8. A communication system, comprising a first terminal, a first network element, a second network element, and a first server, wherein
the first terminal is configured to send first information, wherein the first information comprises a first identifier of the first terminal, and the first terminal accesses a first network;
the first network element is configured to receive the first information;
the first network element is further configured to send second information to the second network element, wherein the second information comprises the first identifier, and the second information requests a second identifier of the first network;
the first network element is further configured to receive third information, wherein the third information comprises the second identifier;
the first network element is further configured to send fourth information to the first server, wherein the fourth information indicates an association relationship between the first identifier and the second identifier; and
the first server is configured to receive the fourth information, and the first server is further configured to manage the first terminal.

9. The system according to claim 8, wherein the communication system further comprises a second terminal;
the first network element is configured to send fifth information, wherein the fifth information comprises the first identifier, the fifth information requests a third identifier of the second terminal, the second terminal is a device that connects the first terminal to the first network, and the first terminal is an industrial terminal device;
the first network element is further configured to receive sixth information, wherein the sixth information comprises the third identifier; and
the first network element is further configured to send seventh information to the first server, wherein the seventh information indicates an association relationship between the first identifier and the third identifier.

10. The system according to claim 9, wherein the fifth information comprises a first event identifier, and the first event identifier indicates to request the third identifier of the second terminal.

11. The system according to claim 9 or 10, wherein the seventh information further indicates an association relationship between the first identifier, the second identifier, and the third identifier.

12. The system according to any one of claims 9 to 11, wherein the third identifier comprises an international mobile subscriber identity, IMSI, and/or an international mobile equipment identity, IMEI, and/or a permanent subscriber identifier, SUPI, and/or a general public subscription identifier, GPSI.

13. The system according to any one of claims 8 to 12, wherein the first identifier comprises a media access control layer, MAC, address and/or an internet protocol, IP, address and/or a device name and/or a device role and/or a device identifier.

14. A computer-readable storage medium, wherein the computer-readable storage medium stores a computer program, and when the computer program is run, the method according to any one of claims 1 to 7 is implemented.

15. A computer program product, wherein the computer program product comprises: computer program code, wherein when the computer program code is run by a communication apparatus, the communication apparatus is enabled to perform the method according to any one of claims 1 to 7.

## Patentansprüche

1. Kommunikationsverfahren, umfassend:
Empfangen (S210) von ersten Informationen von einem ersten Endgerät durch ein erstes Netzwerkelement, wobei die ersten Informationen einen ersten Bezeichner des ersten Endgeräts umfassen;
Senden (S220) von zweiten Informationen durch das erste Netzwerkelement an ein zweites Netzwerkelement, wobei die zweiten Informationen den ersten Bezeichner umfassen, die zweiten Informationen einen zweiten Bezeichner eines ersten Netzwerkes anfordern, und das erste Netzwerk ein Netzwerk ist, auf das das erste Endgerät zugreift;
Empfangen (S230) von dritten Informationen von dem zweiten Netzwerkelement durch das erste Netzwerkelement, wobei die dritten Informationen den zweiten Bezeichner umfassen; und
Senden (S240) von vierten Informationen durch das erste Netzwerkelement an einen ersten Server, wobei die vierten Informationen eine Zuordnungsbeziehung zwischen dem ersten Bezeichner und dem zweiten Bezeichner angeben, und der erste Server dazu konfiguriert ist, das erste Endgerät zu verwalten.

2. Verfahren gemäß Anspruch 1, wobei das Verfahren Folgendes umfasst:
Senden von fünften Informationen durch das erste Netzwerkelement, wobei die fünften Informationen den ersten Bezeichner umfassen, die fünften Informationen einen dritten Bezeichner eines zweiten Endgeräts anfordern, das zweite Endgerät eine Vorrichtung ist, die das erste Endgerät mit dem ersten Netzwerk verbindet, und das erste Endgerät eine industrielle Endgerätvorrichtung ist;
Empfangen von sechsten Informationen durch das erste Netzwerkelement, wobei die sechsten Informationen den dritten Bezeichner umfassen; und
Senden von siebten Informationen durch das erste Netzwerkelement an den ersten Server, wobei die siebten Informationen eine Zuordnungsbeziehung zwischen dem ersten Bezeichner und dem dritten Bezeichner angeben.

3. Verfahren gemäß Anspruch 2, wobei die fünften Informationen einen ersten Ereignisbezeichner umfassen und der erste Ereignisbezeichner angibt, den dritten Bezeichner des zweiten Endgeräts anzufordern.

4. Verfahren gemäß Anspruch 2 oder 3, wobei die siebten Informationen ferner eine Zuordnungsbeziehung zwischen dem ersten Bezeichner, dem zweiten Bezeichner und dem dritten Bezeichner angeben.

5. Verfahren gemäß einem der Ansprüche 2 bis 4, wobei der dritte Bezeichner eine internationale Mobilfunkteilnehmeridentität (International Mobile Subscriber Identity, IMSI), und/oder eine internationale Mobilfunkgerätidentität (International Mobile Equipment Identity, IMEI), und/oder einen permanenten Teilnehmerbezeichner (Permanent Subscriber Identifier, SUPI), und/oder einen allgemeinen öffentlichen Teilnehmerbezeichner (General Public Subscription Identifier, GPSI), umfasst.

6. Verfahren gemäß einem der Ansprüche 1 bis 5, wobei der erste Bezeichner eine Medienzugriffskontroll (Media Access Control, MAC)-Schicht-Adresse und/oder eine Internetprotokoll (Internet Protocol, IP)-Adresse und/oder einen Vorrichtungsnamen und/oder eine Vorrichtungsrolle und/oder einen Vorrichtungsbezeichner umfasst.

7. Verfahren gemäß einem der Ansprüche 1 bis 6, wobei der zweite Bezeichner einen ersten Zellenbezeichner und/oder einen ersten Zugriffspunktname (Access Point Name, APN) umfasst.

8. Kommunikationssystem, das ein erstes Endgerät, ein erstes Netzwerkelement, ein zweites Netzwerkelement und einen ersten Server umfasst, wobei
das erste Endgerät dazu konfiguriert ist, erste Informationen zu senden, wobei die ersten Informationen einen ersten Bezeichner des ersten Endgeräts umfassen, und das erste Endgerät auf ein erstes Netzwerk zugreift;
das erste Netzwerkelement dazu konfiguriert ist, die ersten Informationen zu empfangen;
das erste Netzwerkelement ferner dazu konfiguriert ist, zweite Informationen an das zweite Netzwerkelement zu senden, wobei die zweiten Informationen den ersten Bezeichner umfassen und die zweiten Informationen einen zweiten Bezeichner des ersten Netzwerkes anfordern;
das erste Netzwerkelement ferner dazu konfiguriert ist, dritte Informationen zu empfangen, wobei die dritten Informationen den zweiten Bezeichner umfassen;
das erste Netzwerkelement ferner dazu konfiguriert ist, vierte Informationen an den ersten Server zu senden, wobei die vierten Informationen eine Zuordnungsbeziehung zwischen dem ersten Bezeichner und dem zweiten Bezeichner angeben; und
der erste Server dazu konfiguriert ist, die vierten Informationen zu empfangen, und der erste Server ferner dazu konfiguriert ist, das erste Endgerät zu verwalten.

9. System gemäß Anspruch 8, wobei das Kommunikationssystem ferner ein zweites Endgerät umfasst;
das erste Netzwerkelement dazu konfiguriert ist, fünfte Informationen zu senden, wobei die fünften Informationen den ersten Bezeichner umfassen, die fünften Informationen einen dritten Bezeichner eines zweiten Endgeräts anfordern, das zweite Endgerät eine Vorrichtung ist, die das erste Endgerät mit dem ersten Netzwerk verbindet, und das erste Endgerät eine industrielle Endgerätvorrichtung ist;
das erste Netzwerkelement ferner dazu konfiguriert ist, sechste Informationen zu empfangen, wobei die sechsten Informationen den dritten Bezeichner umfassen; und
das erste Netzwerkelement ferner dazu konfiguriert ist, siebte Informationen an den ersten Server zu senden, wobei die siebten Informationen eine Zuordnungsbeziehung zwischen dem ersten Bezeichner und dem dritten Bezeichner angeben.

10. System gemäß Anspruch 9, wobei die fünften Informationen einen ersten Ereignisbezeichner umfassen und der erste Ereignisbezeichner angibt, den dritten Bezeichner des zweiten Endgeräts anzufordern.

11. System gemäß Anspruch 9 oder 10, wobei die siebten Informationen ferner eine Zuordnungsbeziehung zwischen dem ersten Bezeichner, dem zweiten Bezeichner und dem dritten Bezeichner angeben.

12. System gemäß einem der Ansprüche 9 bis 11, wobei der dritte Bezeichner eine internationale Mobilfunkteilnehmeridentität (IMSI), und/oder eine internationale Mobilfunkgerätidentität (IMEI), und/oder einen permanenten Teilnehmerbezeichner (SUPI), und/oder einen allgemeinen öffentlichen Teilnehmerbezeichner (GPSI) umfasst.

13. System gemäß einem der Ansprüche 8 bis 12, wobei der erste Bezeichner eine Medienzugriffskontroll (MAC)-Schicht-Adresse und/oder eine Internetprotokoll (IP)-Adresse und/oder einen Vorrichtungsnamen und/oder eine Vorrichtungsrolle und/oder einen Vorrichtungsbezeichner umfasst.

14. Computerlesbares Speichermedium, wobei das computerlesbare Speichermedium ein Computerprogramm speichert und, wenn das Computerprogramm ausgeführt wird, das Verfahren gemäß einem der Ansprüche 1 bis 7 implementiert wird.

15. Computerprogrammprodukt, wobei das Computerprogrammprodukt Folgendes umfasst: Computerprogrammcode, wobei, wenn der Computerprogrammcode durch ein Kommunikationsgerät ausgeführt wird, das Kommunikationsgerät in die Lage versetzt wird, das Verfahren gemäß einem der Ansprüche 1 bis 7 durchzuführen.

## Revendications

1. Procédé de communication, comprenant :
la réception (S210), par un premier élément de réseau, de premières informations provenant d'un premier terminal, dans lequel les premières informations comprennent un premier identifiant du premier terminal ;
l'envoi (S220), par le premier élément de réseau, de deuxièmes informations à un second élément de réseau, dans lequel les deuxièmes informations comprennent le premier identifiant, les deuxièmes informations demandent un deuxième identifiant d'un premier réseau, et le premier réseau est un réseau auquel accède le premier terminal ;
la réception (S230), par le premier élément de réseau, de troisièmes informations provenant du second élément de réseau, dans lequel les troisièmes informations comprennent le deuxième identifiant ; et
l'envoi (S240), par le premier élément de réseau, de quatrièmes informations à un premier serveur, dans lequel les quatrièmes informations indiquent une relation d'association entre le premier identifiant et le deuxième identifiant, et le premier serveur est configuré pour gérer le premier terminal.

2. Procédé selon la revendication 1, dans lequel le procédé comprend :
l'envoi, par le premier élément de réseau, de cinquièmes informations, dans lequel les cinquièmes informations comprennent le premier identifiant, les cinquièmes informations demandent un troisième identifiant d'un second terminal, le second terminal est un dispositif qui connecte le premier terminal au premier réseau, et le premier terminal est un dispositif terminal industriel ;
la réception, par le premier élément de réseau, de sixièmes informations, dans lequel les sixièmes informations comprennent le troisième identifiant ; et
l'envoi, par le premier élément de réseau, de septièmes informations au premier serveur, dans lequel les septièmes informations indiquent une relation d'association entre le premier identifiant et le troisième identifiant.

3. Procédé selon la revendication 2, dans lequel les cinquièmes informations comprennent un premier identifiant d'événement, et le premier identifiant d'événement indique de demander le troisième identifiant du second terminal.

4. Procédé selon la revendication 2 ou 3, dans lequel les septièmes informations indiquent également une relation d'association entre le premier identifiant, le deuxième identifiant et le troisième identifiant.

5. Procédé selon l'une quelconque des revendications 2 à 4, dans lequel le troisième identifiant comprend une identité internationale d'abonné mobile, IMSI, et/ou une identité internationale d'équipement mobile, IMEI, et/ou un identifiant d'abonné permanent, SUPI, et/ou un identifiant d'abonnement public général, GPSI.

6. Procédé selon l'une quelconque des revendications 1 à 5, dans lequel le premier identifiant comprend une adresse de couche de commande d'accès au support, MAC, et/ou une adresse protocole Internet, IP, et/ou un nom de dispositif et/ou un rôle de dispositif et/ou un identifiant de dispositif.

7. Procédé selon l'une quelconque des revendications 1 à 6, dans lequel le deuxième identifiant comprend un premier identifiant de cellule et/ou un premier nom de point d'accès, APN.

8. Système de communication, comprenant un premier terminal, un premier élément de réseau, un second élément de réseau et un premier serveur, dans lequel
le premier terminal est configuré pour envoyer des premières informations, dans lequel les premières informations comprennent un premier identifiant du premier terminal, et le premier terminal accède à un premier réseau ;
le premier élément de réseau est configuré pour recevoir les premières informations ;
le premier élément de réseau est également configuré pour envoyer des deuxièmes informations au second élément de réseau, dans lequel les deuxièmes informations comprennent le premier identifiant, et les deuxièmes informations demandent un deuxième identifiant du premier réseau ;
le premier élément de réseau est également configuré pour recevoir des troisièmes informations, dans lequel les troisièmes informations comprennent le deuxième identifiant ;
le premier élément de réseau est également configuré pour envoyer des quatrièmes informations au premier serveur, dans lequel les quatrièmes informations indiquent une relation d'association entre le premier identifiant et le deuxième identifiant ; et
le premier serveur est configuré pour recevoir les quatrièmes informations, et le premier serveur est également configuré pour gérer le premier terminal.

9. Système selon la revendication 8, dans lequel le système de communication comprend également un second terminal ;
le premier élément de réseau est configuré pour envoyer de cinquièmes informations, dans lequel les cinquièmes informations comprennent le premier identifiant, les cinquièmes informations demandent un troisième identifiant du second terminal, le second terminal est un dispositif qui connecte le premier terminal au premier réseau, et le premier terminal est un dispositif terminal industriel ;
le premier élément de réseau est également configuré pour recevoir des sixièmes informations, dans lequel les sixièmes informations comprennent le troisième identifiant ; et
le premier élément de réseau est également configuré pour envoyer des septièmes informations au premier serveur, dans lequel les septièmes informations indiquent une relation d'association entre le premier identifiant et le troisième identifiant.

10. Système selon la revendication 9, dans lequel les cinquièmes informations comprennent un premier identifiant d'événement, et le premier identifiant d'événement indique de demander le troisième identifiant du second terminal.

11. Système selon la revendication 9 ou 10, dans lequel les septièmes informations indiquent également une relation d'association entre le premier identifiant, le deuxième identifiant et le troisième identifiant.

12. Système selon l'une quelconque des revendications 9 à 11, dans lequel le troisième identifiant comprend une identité internationale d'abonné mobile, IMSI, et/ou une identité internationale d'équipement mobile, IMEI, et/ou un identifiant d'abonné permanent, SUPI, et/ou un identifiant d'abonnement public général, GPSI.

13. Système selon l'une quelconque des revendications 8 à 12, dans lequel le premier identifiant comprend une adresse de couche de commande d'accès au support, MAC, et/ou une adresse protocole Internet, IP, et/ou un nom de dispositif et/ou un rôle de dispositif et/ou un identifiant de dispositif.

14. Support de stockage lisible par ordinateur, dans lequel le support de stockage lisible par ordinateur stocke un programme informatique, et lorsque le programme informatique est exécuté, le procédé selon l'une quelconque des revendications 1 à 7 est mis en œuvre.

15. Produit de programme informatique, dans lequel le produit de programme informatique comprend : un code de programme informatique, dans lequel lorsque le code de programme informatique est exécuté par un appareil de communication, l'appareil de communication est activé pour réaliser le procédé selon l'une quelconque des revendications 1 à 7.
